Europäisches Patentamt

European Patent Office

Office européen des brevets

(19)

(11) **EP 1 457 242 B1**

(12) **EUROPÄISCHE PATENTSCHRIFT**

(45) Veröffentlichungstag und Bekanntmachung des Hinweises auf die Patenterteilung:
**27.12.2006  Patentblatt 2006/52**

(51) Int Cl.:
***B01D 1/00*** *(2006.01)*   ***C02F 1/04*** *(2006.01)*

(21) Anmeldenummer: **04005424.9**

(22) Anmeldetag: **08.03.2004**

(54) **Flüssigkeitsverdampfungsverfahren**

Process for evaporating a liquid

Procédé d'évaporation d'un liquide

(84) Benannte Vertragsstaaten:
**AT BE BG CH CY CZ DE DK EE ES FI FR GB GR HU IE IT LI LU MC NL PL PT RO SE SI SK TR**

(30) Priorität: **08.03.2003   DE 10310249**

(43) Veröffentlichungstag der Anmeldung:
**15.09.2004   Patentblatt 2004/38**

(73) Patentinhaber: **Samotec Automation + Trading Elektrohandels-Gmbh**
**76275 Ettlingen (DE)**

(72) Erfinder: **Riahy, Kamran Dr.**
**7 th tir. str**
**Tehran (IR)**

(74) Vertreter: **Blumenröhr, Dietrich et al**
**Lemcke, Brommer & Partner**
**Patentanwälte**
**Bismarckstrasse 16**
**76133 Karlsruhe (DE)**

(56) Entgegenhaltungen:
**DE-C- 967 285**   **GB-A- 606 698**
**US-A- 5 571 385**   **US-A- 6 051 111**

## Beschreibung

Die Erfindung betrifft ein Verfahren zum Verdampfen einer Flüssigkeit, insbesondere Wasser, nach dem Oberbegriff von Anspruch 1, wie es beispielsweise Gegenstand der US-A 6 051 111 und der DE-A 967 285 ist.

Verdampfungsprozesse für Flüssigkeiten werden beispielsweise zum Entsalzen von Meerwasser eingesetzt. In Flüssigkeiten besitzt das Wasser eine hohe - spezifische Wärmekapazität $C_v$ (Specific Heat Capacity) und - Verdampfungswärme $L_v$ (Latent Heat of Vaporization). Diese Eigenschaften verursachen einen sehr hohen Energieverbrauch beim Erhitzen und Verdampfen von Wasser.

Der Grund für den hohen Energieverbrauch liegt im Aufbau der Wasserschwarmbindungen (cluster) und letztendlich im Aufbau der Wassermoleküle. Die hohe Elektronegativität des Sauerstoffs im Vergleich zu Wasserstoff bewirkt die Verschiebung der elektronischen Wolken (electronic cloud) des Wassermoleküls, das zwei Kovalenzverbindungen (sigma bond) besitzt und das einen nicht linearen Dipol mit 104,5˚ Winkel zwischen zwei Kovalenzverbindungen aufweist. Das polarisierte Wassermolekül besitzt eine positive elektronische Wolke um das Wasserstoffatom und eine negative elektronische Wolke um das Sauerstoffatom.

Die positive Ladung um das Wasserstoffatom ermöglicht dem polarisierten Molekül, eine Bindung entlang seiner kovalenten Bindung mit der negativen Ladung des nächsten polarisierten Wassermoleküls herzustellen. Die Sammlung dieser Bindungen, die elektrostatische oder Wasserstoff-Bindung genannt werden (H-bond), bilden dann die Wasserschwarmbindungen (cluster structure). Die H-Bindungen kommen über Ladungen zustande, die Sigmabindungen dagegen über gemeinsame Elektronen.

Um diese Sigma- oder Kovalenz-Bindungen zu knacken, ist eine sehr hohe Energie nötig. Das ist der Grund für den hohen Energieverbrauch für das Verdampfen von Wasser.

Wird Wasser erwärmt, so werden zu Beginn der Wärmezufuhr die Wassermoleküle in Bewegung versetzt und die Wasserstoffbindungen werden elastisch gedehnt. Solange diese Bindungen weniger als 3,1 Angström Abstand haben und der Winkel zwischen Ihnen größer als 146˚ ist, werden sie nicht getrennt. Daher ist Wasser vor Eintreten der Trennung von H-Bindungen nur ein Wärmespeicher. Die gespeicherte Wärme erhöht die kinetische Energie nicht. Die Wärme kann nur an die Umgebung abgegeben werden. Um die Wasserstoffbindungen zu zerlegen und die einzelnen Moleküle freizusetzen, ist zusätzliche Wärme nötig. In dem Verdampfungsprozess sind es diese einzelnen Moleküle, die das flüssige Wasser verlassen und in den Dampfzustand übergehen. Das flüssige Wasser besteht zu etwa 10% aus kovalenten Bindungen (Sigmabindung) und zu 90% aus elektrostatischen Bindungen (Wasserstoffbindungen). Durch Wärmezufuhr und Steigern der Zahl der Einzelmoleküle und Erhöhung der kinetischen Energie erhöht sich der Innendruck. Wenn der Innendruck dem Umgebungsdruck entspricht, fängt das Wasser zu kochen an. Selbst bei kochendem Wasser sind immer noch 75 % (elektrostatische) Wasserstoffbindungen vorhanden und es ist zusätzlich das Fünf- bis Sechsfache der Wärmeenergie nötig, die bis zu diesem Stadium verbraucht wurde, um die restlichen 75 % der elektrostatischen Wasserstoffbindungen zu brechen. Dazu muss die kinetische Energie der Wassermoleküle soweit erhöht werden, dass die Anziehungskräfte der Molekülbindungen (intermolecular attraction) überwunden werden und die Moleküle das flüssige Wasser als Dampf verlassen können. Etwa die Hälfte der zugeführten Wärme wird also dazu benutzt, die elektrostatischen Bindungen zu zerlegen. Ein Teil dieser Wärme wird für die Ausdehnung des Dampfvolumens benötigt und der Rest wird für die Erhöhung der kinetischen Energie verbraucht.

Aufgabe der vorliegenden Erfindung ist es, ein Verfahren und eine Vorrichtung zur Verfügung zu stellen, bei dem bzw. bei der der Energieverbrauch zur Verdampfung einer Flüssigkeit im Gegensatz zu den konventionellen Verfahren deutlich gesenkt wird.

Diese Aufgabe wird gelöst durch ein Verfahren mit dem Merkmalen von Anspruch 1 sowie durch die Vorrichtung mit dem Merkmalen von Anspruch 19.

Die elektrische Feldstärke während der Zeitphasen $t_1$ und $t_3$ wird so gewählt, dass die Bindungen zwischen den Wasserstoffatomen und den Sauerstoffatomen des Wassers zumindest teilweise gespalten werden und dadurch geladene Teilchen entstehen, insbesondere $OH^-$ und $H^+$ -Ionen.

Weiterhin bewirkt das elektrische Feld, dass die Flüssigkeitsschwärme (cluster) in kleinere Einheiten zerlegt werden. Wasserstoffbrückenbindungen zwischen den einzelnen Molekülen werden gelöst. Außerdem richten sich die Wassermoleküle aufgrund ihres elektrischen Dipols im elektrischen Feld aus. Besonders vorteilhaft ist es dabei, wenn die elektrische Feldstärke so gewählt wird, dass nach der Zeitphase $t_1$ ca. die Hälfte der Flüssigkeitsschwärme (cluster) in kleinere Einheiten zerlegt sind.

Als besonders vorteilhaft hat es sich erwiesen, wenn die Flüssigkeit zu Beginn der Zeitphasen $t_1$ und $t_3$ nahezu impulsartig einem elektrischen Feld ausgesetzt werden, um eine chemische Zersetzung des Wassers zu verhindern. Dazu werden die Zeitphasen $t_1$ bzw. $t_3$ abhängig vom Gehalt der in der Flüssigkeit enthaltenen Salze gewählt.

Während der Zeitphasen $t_1$ bzw. $t_3$ werden die erzeugten Ionen z.B. $H^+$, $OH^-$, $A^+$, $A^-$-Ionen unter dem Einfluss des elektrischen Feldes in Richtung ihres jeweiligen Gegenpols beschleunigt und dadurch eine Reduktion der Translationsfreiheitsgrade erzielt.

Das abgewinkelte, nicht lineare Wassermolekül hat drei Translationsfreiheitsgrade und drei Rotationsfreiheitsgrade. Bei niedriger Temperatur sind die Schwingungsfreiheitsgrade noch nicht angeregt. Durch das provisorische Ionisieren des Wassers wandeln sich die nicht linearen Wassermoleküle zu linearen $OH^-$-Ionen und einem punktförmigen $H^+$-Ionen um. Das $OH^-$-Ion hat nur noch 2 Rotationsfreiheitsgrade und 3 Translationsfreiheitsgrade. Das $H^+$-Ion besitzt keinen Rotationsfreiheitsgrad mehr, aber 3 Translationsfreiheitsgrade. Unter dem Einfluss des angelegten elektrischen Feldes können sich die Ionen nur noch in Richtung des jeweiligen Gegenpols bewegen. Das bedeutet, dass sich bei den Ionen die Translationsfreiheitsgrade auf einen Freiheitsgrad reduzieren. Das $OH^-$-Ion besitzt während der Zeitphasen $t_1$ bzw. $t_3$ somit insgesamt nur einen Translationsfreiheitsgrad und zwei Rotationsfreiheitsgrade (sofern man die Schwingungsfreiheitsgrade außer Acht lässt) und hat somit insgesamt nur noch drei Freiheitsgrade. Das $H^+$-Ion (Proton) hat während der Zeitphasen $t_1$ bzw. $t_3$ insgesamt nur noch einen Freiheitsgrad.

Es besteht ein direkter Zusammenhang zwischen der Anzahl der Freiheitsgrade und der Wärmekapazität ($C_v$) und der Verdampfungswärme ($L_v$ - Enthalpie) eines Stoffes:

$$C_v = \frac{f}{2} \cdot n \cdot K_B$$

$$L_v = \frac{z}{2} \cdot n \cdot \Delta\varepsilon$$

wobei

$C_v$ = Wärmekapazität (Heat Capacity)
$L_v$ = Verdampfungswärme (Heat of vaporization oder enthalphy of vaporization)
f = Wert des Freiheitsgrades
n = Anzahl der Moleküle
$K_B$ = Bolzman'sche Konstante
z = Mittlere Anzahl der Nachbarschafts-Moleküle
$\varepsilon$ = Potentielle Energie der Moleküle (enthält alle 3 Bewegungsenergien Translation, Rotation und Schwingung).

Aufgrund der Reduktion der Freiheitsgrade wird auch die Wärmekapazität vermindert und dadurch die zur Erwärmung notwendige Energie.

Durch den ständigen Wechsel der Polarität der korrespondierenden Elektroden in entsprechend kleinen Zeitphasen $t_1$ und $t_3$ wird eine chemische Zersetzung des Wassers weitgehend verhindert. Im Wasser werden zwar Ionen gebildet und diese in Richtung auf den jeweiligen Gegenpol beschleunigt, jedoch werden E-lektronenübertragungsreaktionen zwischen den Ionen und den Elektroden weitgehend verhindert. Durch die Kürze der Zeitintervalle der wechselnden Polarität wird die Bildung von Wasserstoff- bzw. Sauerstoffgas weitgehend unterbunden. Auch Ablagerungen von Stoffen wie z.B. Kalzium oder Magnesium werden durch die Kürze der Zeitintervalle der wechselnden Polarität vermieden. Die Ionen der entsprechenden Salze werden in dem System so oft hin und her beschleunigt, dass sie das System verlassen, bevor Ablagerungen gebildet werden.

Der Polaritätswechsel wird solange wiederholt, bis die Anzahl der Ionen größer ist als die Anzahl der neutralen Teilchen und bis die Geschwindigkeit der im elektrischen Feld beschleunigten Ionen größer ist als die thermische Geschwindigkeit der neutralen Teilchen.

Als besonders vorteilhaft hat es sich erwiesen, wenn die elektrische Feldstärke während der Phasen $t_1$ bzw. $t_3$ periodische Schwankungen durchführt. Dazu wird an die Elektroden eine pulsierende Gleichspannung angelegt. Die Stärke, Frequenz und Form der Spannungsschwankungen wird in Abhängigkeit der Art und der Menge der in der Flüssigkeit gelösten Salze gewählt.

Das erfindungsgemäße Verfahren arbeitet besonders effektiv, wenn während der Umkehrung der Richtung des elektrischen Feldes Zeitphasen $t_2$ bzw. $t_4$ liegen, während derer das elektrische Feld zwischen den Elektroden nahezu aufgehoben wird und sich ein Teil der während der Zeitphasen $t_1$ bzw. $t_3$ gebildeten Ionen wieder rekombinieren können. Benachbarte $OH^-$ und $H^+$-Ionen verbinden sich innerhalb von ca. 0,1 Picosekunden wieder zu einem Molekül. Ein Teil der zur Spaltung des Wassermoleküls verbrauchten Energie wird in diesem Schritt wiedergewonnen (Gibb's free Energy).

Während der Zeitphasen $t_2$ bzw. $t_4$ versuchen die Einzelmoleküle, ihre Struktur wieder herzustellen (Reorientierung). Aufgrund der schnellen Temperaturerhöhung und dem konstanten Siedepunkt (erhöhte Entropie) gelingt dies den meisten Einzelmolekülen aber nicht. Es gibt aber trotzdem einige wenige gelungene Verbindungen. Während dieser Phasen gibt es nun viele Einzelmoleküle. Die Zahl der Einzelmoleküle wird wegen der sich ständig wiederholenden Zyklen erhöht. Einzelmoleküle können mit viel weniger Energieaufwand verdampft werden.

Die Zeitphasen $t_2$ bzw. $t_4$ sind dabei wesentlich kürzer als die Zeitphasen $t_1$ und $t_3$.

Bei dem erfindungsgemäßen Verfahren bzw. der erfindungsgemäßen Vorrichtung werden die Zeitphasen $t_1$, $t_2$, $t_3$ und $t_4$ in Abhängigkeit der Menge und der Art der in der Flüssigkeit gelösten Salze gewählt und kontinuierlich überprüft und angepasst.

Der bei dem erfindungsgemäßen Verfahren eingesetzte Signalgenerator erzeugt vorzugsweise eine variierbare Gleichspannung, mit der die Elektroden beaufschlagt werden. Der Signalgenerator kann dabei Amplituden von einigen 100 Volt erzeugen.

Die Elektroden können bei dem erfindungsgemäßen Verfahren unterschiedliche Formen haben. Sie können beispielsweise als flächige Platten oder auch ringförmig oder in anderen Formen ausgebildete Elektroden sein.

Vorzugsweise bestehen die Elektroden aus einem nicht metallischen Material oder einem stromleitenden Polymermaterial.

Die elektrische Feldstärke wird in Abhängigkeit der Menge und der Art der in der Flüssigkeit gelösten Salze gewählt und kontinuierlich durch einen Analysator überprüft und angepasst.

Das erfindungsgemäße Verfahren und die erfindungsgemäße Vorrichtung können nicht nur zur Dampferzeugung von gereinigtem oder gar destillierten Wasser verwendet werden, sondern im Gegenteil ist es von Vorteil, das Verfahren bzw. die Vorrichtung mit ungereinigtern, Mineralien enthaltenden Wasser und sogar mit Meerwasser zu benutzen, da die Mineralien beim Anlegen von Spannung zu Schwingungen angeregt werden und dadurch das Wasser leichter aufgeheizt werden kann. Etwaige im Wasser bzw. in der Flüssigkeit gelöste Mineralien kondensieren aus und können anschließend aus dem System abgeführt werden.

Durch die Verwendung von ungereinigtem Wasser lassen sich vor allem die Kosten für die Durchführung des Verfahrens erheblich reduzieren; im Gegensatz dazu benötigen herkömmliche Dampferzeugungsanlagen gereinigtes Wasser, dessen Zurverfügungstellung naturgemäß mit entsprechend höheren Kosten verbunden ist, sofern es überhaupt verfügbar ist und nicht eigens für die Anlage hergestellt werden muss.

Das erfindungsgemäße Verfahren und die erfindungsgemäße Vorrichtung lassen sich aber nicht nur als stand-alone-Anlage nutzen, sondern auch als HybridSystem mit herkömmlichen Dampferzeugungsanlagen kombinieren. Denn wird durch das erfindungsgemäße Verfahren das in einem Boiler einer herkömmlichen Dampferzeugungsanlage zu verdampfende Wasser so vorbehandelt, dass die Wasserstoffbindungen aufgebrochen werden, so ist eine entsprechend reduzierte Energie im Boiler für die Dampferzeugung erforderlich.

Zwar verteilt sich die in den Zeitphasen $t_1$ und $t_3$ entstehende Energie in den Ruhephasen $t_2$ und $t_4$ im gesamten System; dennoch wird die Flüssigkeit durch das erfindungsgemäße Verfahren nicht primär erhitzt oder zum Kochen gebracht, sondern ein ursprünglich kaltes Wasser wird ohne Zwischenstufe des Kochens direkt in Dampf umgewandelt.

Die erfindungsgemäße Vorrichtung besitzt als wesentlichen Bestandteil einen Analysator, der die Temperatur und auch beispielsweise den Salzgehalt der dem System zuzuführenden Flüssigkeit misst, um die Spannung und die Durchflussmenge entsprechend anzupassen. Der Analysator berücksichtigt hierbei nicht nur Temperaturunterschiede entsprechend den Jahreszeiten, sondern auch beispielsweise, ob das System im Kreislauf betrieben, also die Flüssigkeit nach der Dampferzeugung und Kondensierung wieder gesammelt und dem System erneut zugeführt wird.

Weitere Merkmale und Vorteile der Erfindung ergeben sich aus der Beschreibung eines Ausführungsbeispieles anhand von Zeichnungen und aus den Zeichnungen selbst; dabei zeigt

Figur 1    eine schematische Darstellung der erfindungsgemäßen Vorrichtung;

Figur 2    den Spannungsverlauf als Funktion der Zeit, mit dem die Elektroden vom Signalgenerator beaufschlagt werden;

Figur 3    alternative Spannungsverläufe als Funktion der Zeit;

Figur 4    die bei dem erfindungsgemäßen Verfahren eingesetzte Energiemenge und die thermodynamisch benötigte Energiemenge als Funktion der Flüssigkeitstemperatur;

Figur 5    den Quotient aus dem Energieverbrauch des erfindungsgemäßen Verfahrens und der thermodynamisch benötigten Energiemenge als Funktion der Flüssigkeitstemperatur;

Figur 6    ein die vorliegende Erfindung verwendendes Hybridsystem.

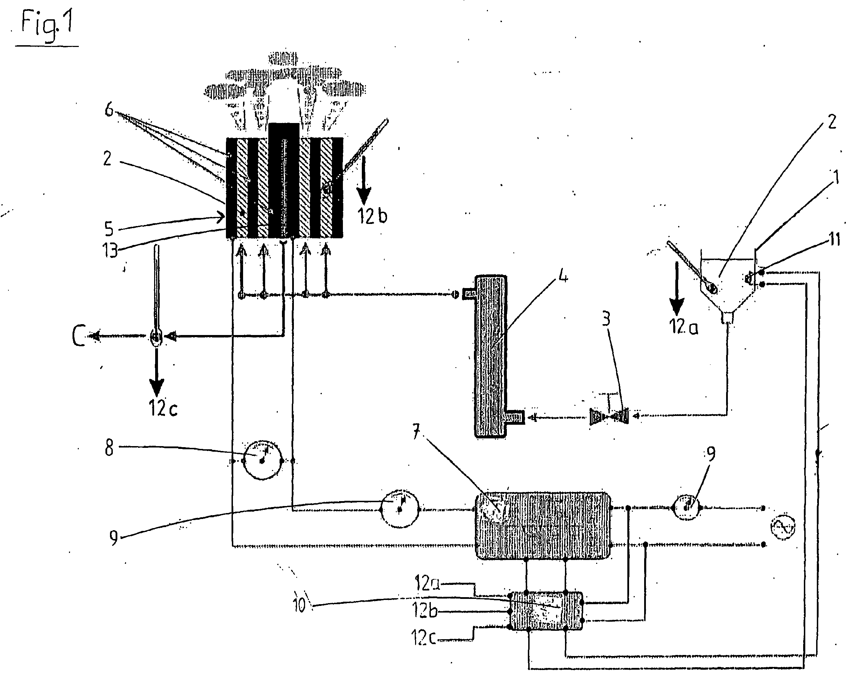

In Figur 1 erkennt man einen Behälter 1, der mit Salzwasser 2 gefüllt ist. Das Salzwasser 2 wird über ein Ventil 3 und einen Durchflussmesser 4 einem Verdampfungssystem 5 zugeführt. In dem Verdampfungssystem 5 wird das Salzwasser 2 einem elektrischen Feld ausgesetzt. Das elektrische Feld wird von Elektroden 6 erzeugt. Die Elektroden 6 sind dazu an einen Signalgenerator 7 angeschlossen. Die vom Signalgenerator 7 erzeugte Spannung kann mit einem Voltmeter 8 gemessen werden. Der vom Signalgenerator 7 erzeugte Strom wird mit einem Amperemeter 9 bestimmt.

Der Signalgenerator 7 erzeugt einen zeitabhängigen Spannungsverlauf. Der Spannungsverlauf wird in Abhängigkeit der Salzkonzentration des zu verdampfenden Wassers vom Signalgenerator 7 generiert. Die Salzkonzentration des Wassers wird mit Hilfe eines Sensors 11 bestimmt. Der Wert der Salzkonzentration wird dann vom Analysator 10 ausgewertet und an den Signalgenerator 7 weitergeleitet.

Auf Grund der Bewertung des Analysators werden die Zeiten $t_1$ bis $t_4$ bestimmt und damit die Frequenz des Vorganges.

Neben dem Messwert der Salzkonzentration werden die Temperturmesswerte 12a, 12b und 12c an den Analysator 10 übertragen. Dabei bezeichnet 12a die Temperatur des Salzwassers 2 in dem Behälter 1, 12b die Temperatur des Salzwassers 2 in dem Verdampfungssystem 6 und 12c die Temperatur der über den Abfluss C ausgeschleusten Mineralien 13.

Als Material für die Elektroden werden vorzugsweise Werkstoffe aus nichtmetallischem stromleitenden Polymer-Material eingesetzt.

Die Elektroden 6 haben einen Abstand d voneinander, der in Abhängigkeit der Flüssigkeitszusammensetzung und der an den Elektroden angelegten Spannung gewählt wird.

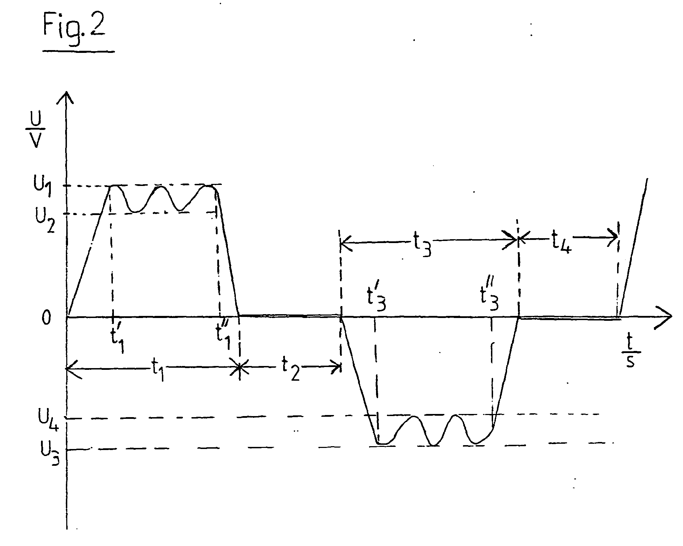

Figur 2 zeigt ein typisches Beispiel für einen vom Signalgenerator 7 generierten Spannungsverlauf als Funktion der Zeit.

Zu Beginn der Zeitphase $t_1$ steigt die Spannung zunächst steil bis zu einem Spannungswert $U_1$ an. Ab einem Zeitpunkt $t'_1$ führt die Spannung einen zyklischen Wechsel durch und schwankt zwischen der Spannung $U_1$ und der Spannung $U_2$. Diese Spannungsschwankungen wiederholen sich periodisch bis zu einem Zeitpunkt $t''_1$. Im Ausführungsbeispiel handelt es sich um sinusförmige Schwankungen, wobei aber auch andere Formen möglich sind. Ab dem Zeitpunkt $t''_1$ nimmt die Spannung steil ab und erreicht am Ende der Zeitphase $t_1$ den Wert + ungefähr/nahezu 0. Dann folgt eine Zeitphase $t_2$, in der keine Spannung an den Elektroden anliegt und somit eine teilweise Rekombination der während der Zeitphase $t_1$ gebildeten Ionen stattfinden kann. Am Ende der Zeitphase $t_2$ kommt es zu einem starken Spannungsabfall bis zu einer Spannung von $U_3$. Ab dem Zeitpunkt $t'_3$ durchläuft der Spannungsverlauf einen zyklischen Wechsel und schwankt zwischen den Spannungen $U_3$ und $U_4$. Dieser zyklische Wechsel wiederholt sich periodisch bis zu dem Zeitpunkt $t''_3$, danach steigt die Spannung wieder steil an und erreicht zu Beginn der Zeitphase $t_4$ den Wert nahezu 0. Während der Zeitphase $t_4$ bleiben die Elektroden erneut spannungslos. Am Ende der Zeitphase $t_4$ steigt der Spannungsverlauf wieder steil bis zu einem Spannungswert $U_1$ an und der Zyklus wiederholt sich von neuem.

Die Spannungen und die Zeitphasen werden in Abhängigkeit der Art und der Menge der in der Flüssigkeit gelösten Salze gewählt.

Zwischen den Zeitpunkten $t'_1$ und $t''_1$ bzw. zwischen $t'_3$ und $t''_3$ wird an die Elektroden eine pulsierende Gleichspannung angelegt. Die Spannung schwankt um einen Betrag $\Delta U_{1,2}$ bzw. $\Delta U_{3,4}$. Die Spannungsdifferenzen $\Delta U_{1,2}$ und $\Delta U_{3,4}$ sowie die Frequenz der Schwankung ist abhängig von der Menge und der Art an gelösten Stoffen in der Flüssigkeit und wird individuell für jede Flüssigkeit angepasst.

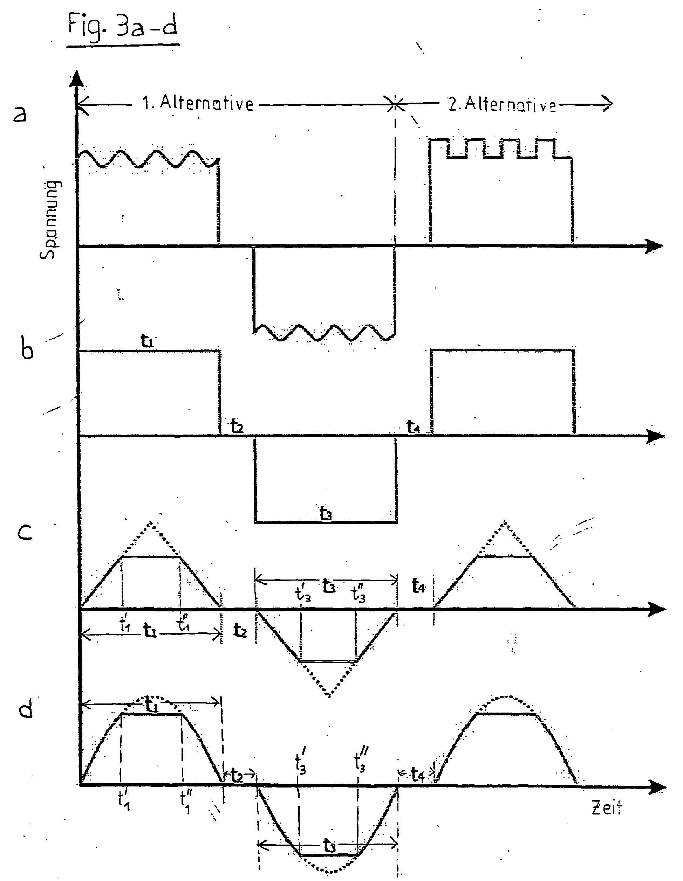

Die Figuren 3a bis f zeigen alternative Spannungsverläufe zu der in Figur 2 dargestellten Funktion.

Der in Figur 3a, 1. Alternative dargestellte Verlauf gleicht im Wesentlichen der Spannungsfunktion von Figur 2. Lediglich der Spannungsanstieg bzw. Spannungsabfall zwischen den einzelnen Zeitphasen $t_1$, $t_2$, $t_3$ und $t_4$ erfolgt senkrecht.

Figur 3a, 2. Alternative zeigt ebenfalls einen senkrechten Spannungsanstieg bzw. Spannungsabfall zwischen den einzelnen Zeitphasen. Die zyklischen Spannungsschwankungen folgen bei diesem Ausführungsbeispiel einem Rechteckverlauf.

Der in Figur 3b dargestellte Verlauf weist im Gegensatz zu den Spannungsfunktionen gemäß Figur 3a keine zyklischen Schwankungen während der Zeitphasen $t_1$ bzw. $t_3$ auf.

Figur 3c zeigt im Unterschied zu Figur 3b einen Spannungsverlauf mit einem linearen Anstieg bzw. Abfall.

In Figur 3d ist ein Spannungsverlauf dargestellt, bei dem die Spannung zunächst ansteigt, wobei mit zunehmender Zeit die Steigung des Spannungsanstiegs abnimmt. Ab der Zeit $t'_1$ zeigt die Spannung einen konstanten Verlauf. Ab dem Zeitpunkt $t''_1$ nimmt die Spannung wieder ab, wobei die Steigung der Spannungskurve kontinuierlich zunimmt. Während der Zeitspanne $t_2$ hat die Spannung den Wert nahezu Null. Nach der Zeitspanne $t_2$ fällt die Steigung ab, wobei die Steigung der Spannungskurve mit zunehmender Zeit abnimmt. Ab dem Zeitpunkt $t'_3$ zeigt die Spannung zunächst wieder einen konstanten Verlauf.

Nach dem Zeitpunkt $t''_3$ steigt die Spannung wieder kontinuierlich an, wobei die Steigung kontinuierlich zunimmt.

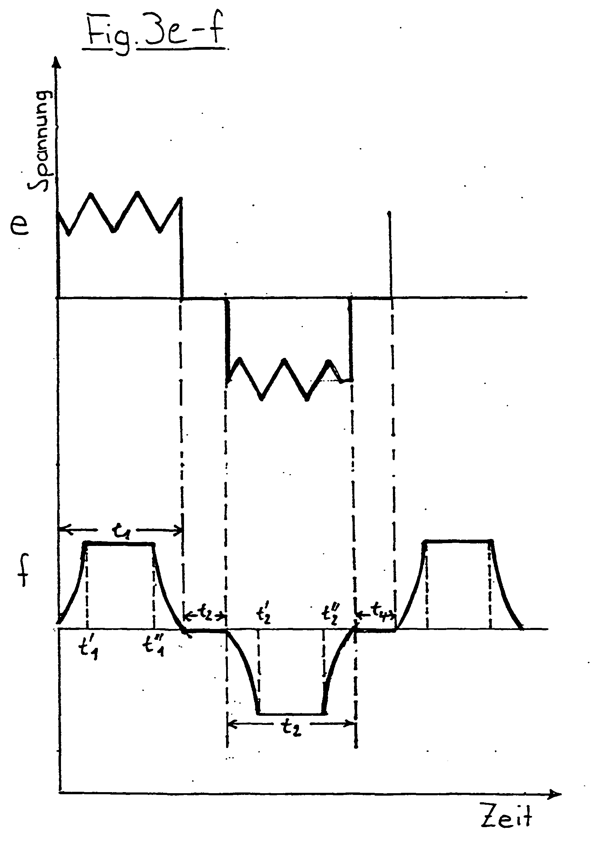

Figur 3e zeigt einen Spannungsverlauf während der Zeitphasen $t_1$ und $t_3$ in Dreieck- bzw. Zickzackform, ähnlich dem sinusförmigen Verlauf aus Figur 3a, 1. Alternative. Und Figur 3f schließlich zeigt einen an Figur 3d angelehnten Verlauf mit umgekehrter parabelähnlicher Steigungszu- bzw. -abnahme.

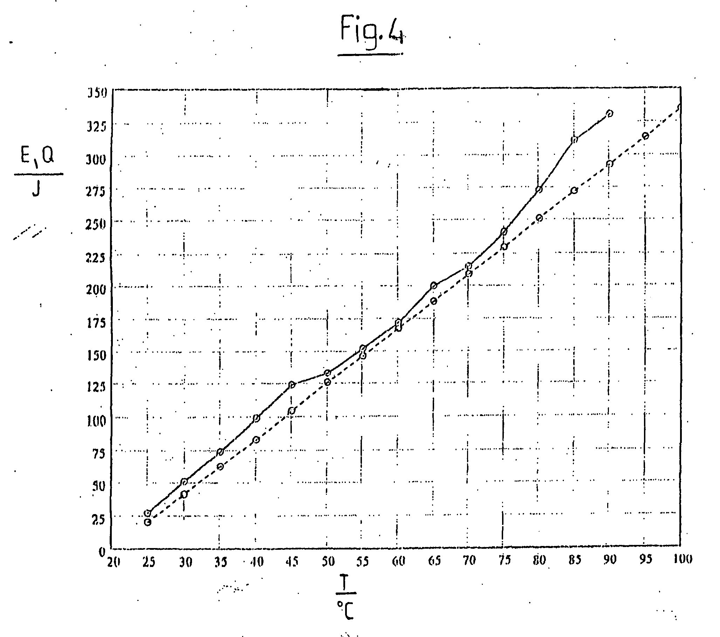

In Figur 4 ist die bei dem erfindungsgemäßen Verfahren eingesetzte Energiemenge E (als durchgezogene Linie) und die nach der Thermodynamik benötigte Energiemenge als gestrichelte Linie Q in Abhängigkeit der Flüssigkeitstemperatur aufgetragen.

Die gemessenen Werte zeigen, dass bei Temperaturen unter 100°C die von dem erfindungsgemäßen Verfahren verbrauchte Energie über der thermodynamischen Idealkurve liegt. Um 1 cm$^3$ Wasser von 20° C zum Kochen zu bringen, braucht die erfindungsgemäße Vorrichtung eine Energie von 350 Joule. Bei den Temperaturen von 60° C und 75° C zeigt die Energiemenge E einen ungewöhnlichen Verlauf, da sich die Energiewerte der thermodynamischen Idealkurve annähern und der Wirkungsgrad einen Wert von 97 % erreicht.

Bei dem erfindungsgemäßen Verfahren fängt das Wasser bei einem Druck von 1 Atmosphäre schon unterhalb von 100˚ C zu kochen an (75˚ C bis 80˚ C). Das Verdampfen erfolgt ab diesen Temperaturen, bis 100˚ C erreicht werden. Dies ist ein Beweis dafür, dass viele einzelne Moleküle vorhanden sind und die Wasserstoffbindungen zerlegt wurden. Während der Zeitphasen $t_1$ und $t_3$ werden viele Einzelmoleküle gebildet. Daher ist zum Kochen und zum Verdampfen weniger Energie erforderlich als bei herkömmlichen Verfahren.

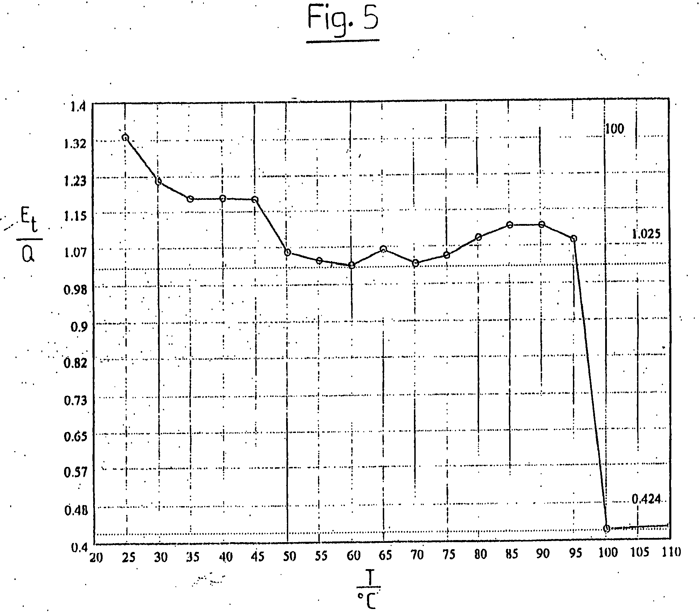

In Figur 5 ist der Quotient aus dem Energieverbrauch des erfindungsgemäßen Verfahrens und der thermodynamisch benötigten Energiemenge als Funktion der Flüssigkeitstemperatur aufgetragen.

An der Grenze zum Kochen fällt der Quotient steil auf einen Wert von 0,424 ab. Das heißt, der Wirkungsgrad des erfindungsgemäßen Verfahrens erhöht sich um 235,745 %.

Die höchste Leistung des erfindungsgemäßen Verfahrens wird weder in der Phase des flüssigen Zustandes noch in der Phase des Dampfzustandes erreicht, sondern in der Phase dazwischen, d. h. zwischen Temperaturen von 90˚ C und 100˚ C.

Die thermodynamisch benötigte Energie, um 1 cm$^3$ Wasser von 20 ˚C bei einer Atmosphäre zum Kochen und Verdampfen zu bringen, beträgt 2593,2 Joule. Bei dem erfindungsgemäßen Verfahren beträgt die dazu notwendige Energie 1100 Joule.

Dass dieses Ergebnis nicht im Widerspruch zu den thermodynamischen Gesetzmäßigkeiten steht, zeigen die folgenden Berechnungen:

Beispielhafte Berechnungen:

Von der Energiemenge von 2.593,2 Joule wird nicht der gesamte Betrag dazu genutzt, um die kinetische Energie zu erhöhen, sondern ein Teil der Energie wird zur Ausdehnung des Dampfes benötigt.

$$H= U+W \quad\quad H=\text{ Enthalpie}$$
$$U=\text{ Innere Energie}$$
$$W=\text{ P.V Arbeit des Systems auf die Umgebung (Ausdehnung)}$$

Der Wert der Arbeit W, das heißt die Arbeit, die der Dampf an der Umgebung verrichtet, errechnet sich folgendermaßen:

$$W = P \cdot \Delta V = P \cdot (V_2 - V_1)$$

$$W = (1{,}013\cdot 10^5\, N / m^2) \cdot \left[(1671-1)\cdot 10^{-6}\, m^3\right]$$

$$W = 169{,}171\, J\,(\text{für } 1\, cm^3)$$

Diese Energiemenge ist bei einem konventionellen System und bei dem erfindungsgemäßen System (im folgenden mit dem Index "S.Gx" bezeichnet) gleich groß. Die übrige Energie wird für die kinetische Energie und das Zerteilen der Wasserstoffbindungen benötigt.

$$E_{(Therm.)} = 2593{,}2\,J - 169{,}171\,J = 2424{,}029\,J$$

$$E_{(S.Gx)} = 1100\,J - 169{,}171\,J = 936{,}829\,J$$

Der Wirkungsgrad des erfindungsgemäßen Verfahrens (mit "S.Gx" bezeichnet) beträgt

$$\frac{E_{(Therm.)}}{E_{(S.Gx)}} \cdot 100 = 258,748\% \text{ oder anders ausgedrückt: } \frac{E_{(S.Gx)}}{E_{(Therm.)}} \cdot 100 = 38,6\%$$

wobei die benötigte Energie bei $S_{Gx}$ ungefähr 38,6 % der $E_{th}$ ist.

Ein Großteil der verbrauchten Energie wird zum Zerlegen der Wasserstoffbindungen benutzt, das heißt für 1 cm³ Wasser wird beim herkömmlichen Verfahren 1294,45 J/g für das Zerlegen der Wasserstoffbindungen benötigt, der Rest wird für die kinetische Energie benötigt. Der gesamte Energieverbrauch ist bei dem erfindungsgemäßen Verfahren geringer als bei dem klassischen Verfahren allein für das Aufbrechen der Wasserstoffbindungen.

Bei dem erfindungsgemäßen Verfahren ist viel weniger Energie nötig, um die Wasserstoffbindungen zu zerlegen. Gemäß der durchgeführten Messungen und Berechnungen beträgt die Energie 323,414 J.

Der Grund für den niedrigen Energieverbrauch bei der Zerlegung der Wasserstoffbindungen ist folgender:

In der Zeitspanne $t_1$ und $t_3$ werden provisorische Ionen erzeugt, wodurch die Bindungen des ionisierten Moleküls zu Nachbarmolekülen zerlegt werden. Die Nachbarmoleküle werden vor der Rekombination (reorientation) unter Einfluss des elektrischen Feldes in Feldrichtung (Dipolmoment) orientiert. Dieser Vorgang führt in jeder wiederholenden Phase von $t_1$ und $t_3$ zu einem weiteren Zerlegen der Wasserschwärme (cluster) in kleinere Teile, bis letztendlich fast alle H-Bindungen mit wenig Energie (ohne Wärmeenergie) zerlegt werden.

Der Wirkungsgrad für das Zerlegen der Wasserstoffbindungen beträgt:

$$\frac{E_{B(Therm.)}}{E_{B(S.Gx)}} \cdot 100 = \frac{1294,5}{323,414} \cdot 100 = 400,26\% \text{ bzw. } \frac{E_{B(S.Gx)}}{E_{B(Therm.)}} \cdot 100 = 24,98\%$$

Um den Wert der kinetischen Energie $E_K$ von 1 cm³ Wasser zu berechnen und zwischen beiden Systemen zu vergleichen, muss sowohl die Energie des Arbeitsanteils des Dampfes an seiner Umgebung, als auch die Energie für die Zerteilung der Wasserstoffbindungen von der Gesamtenergie abgezogen werden:

$$E_{k(Therm.)} = 2593,2J - 169,171J - 1294,45J = 1129,379J$$

$$E_{k(S.Gx)} = 1100J - 169,171J - 323,414 \approx 607,416J$$

Das Verhältnis von der thermodynamisch benötigten kinetischen Energie zu der bei dem erfindungsgemäßen Verfahren ("S.Gx") verbrauchten Energie beträgt:

$$\frac{E_{k(Therm.)}}{E_{k(S.Gx)}} \cdot 100 = \frac{1129,379J}{607,417J} \cdot 100 = 185,931\% \text{ bzw. } \frac{E_{k(S.Gx)}}{E_{k(Therm.)}} \cdot 100 = 53,78\%$$

Die kinetische Energie, die bei dem erfindungsgemäßen Verfahren aufgebracht werden muss, ist zirka nur halb so groß wie die kinetische Energie des herkömmlichen Verfahrens.

$$\frac{607,416J}{1129,379J} = 0,537$$

Der Grund für diesen erstaunlichen Unterschied ist die Reduzierung der Freiheitsgrade, nämlich die Reduzierung der Freiheitsgrade des Wassermoleküls von 6 auf 3 für das OH⁻-Ion und auf einen Freiheitsgrad für das H⁺-Ion.

Unter der Einwirkung des elektrischen Feldes besitzt das OH⁻-Ion nur noch 3 Freiheitsgrade und das H⁺-Ion nur noch einen Freiheitsgrad.

Die Erklärung dafür, dass die bei dem erfindungsgemäßen Verfahren benötigte Energie geringer ist als die thermodynamisch benötigte Energie ist folgende: Wassermoleküle haben drei Translationsfreiheitsgrade und drei Rotationsfreiheitsgrade. Im Vergleich dazu besitzen bei dem erfindungsgemäßen Verfahren die $OH^-$-Ionen nur 2 Rotationsfreiheitsgrade und das $H^+$-Ion gar keinen Rotationsfreiheitsgrad. Die Translationsfreiheitsgrade der $OH^-$-Ionen und $H^+$-Ionen reduzieren sich bei dem erfindungsgemäßen Verfahren auf einen Freiheitsgrad.

Um Bewegung der Ionen und der Dipol-Moleküle in andere als die durch die elektrische Feldstärke vorgegebenen Richtungen zu verbinden, wird die Feldstärke so gewählt, dass sie eine höhere Wirkung aufweist als die im System erzeugte Wärme, d. h. die reduzierten Translationsfreiheitsgrade werden garantiert.

Die benötigte kinetische Energie berechnet sich wie folgt:

$$E_{total} = E_{rot(OH)} + \tfrac{1}{2} \cdot m_1 \cdot v_{(OH)}^2 + \tfrac{1}{2} \cdot m_2 \cdot v_{(H)}^2$$

Normalerweise sind $C_v$ und $L_v$ abhängig von den Grundeigenschaften des Wassers. Die $C_v$- und $L_v$- Werte sind bei gleichen Bedingungen überall gleich groß. In mikroskopischer Analyse stellt man fest, dass diese Werte völlig abhängig sind von der Anzahl (z) der Nachbarschaftsmoleküle und der Energie der Wasserstoffbindungen (H-Bond) des Wassers.

In Lv (Enthalpie des Verdampfens) steckt auch die Arbeit, die der Dampf an der Umgebung verrichtet.

Bei dem $S_{Gx}$-Verfahren wird in den Zeitphasen $t_1$ und $t_3$ die Bedeutung der $C_v$-und $L_v$-Werte etwas anders definiert, da die H-Bindungen unter 85° C fast vollständig zerlegt werden. Das Wasser enthält dann Ionen und Dipole und es sind nicht die $C_v$- und $L_v$- Werte, die zum Verdampfen des Wassers führen, sondern nur die kinetische Energie der Zusammenstöße und die Zusammenhänge der Ionen-Dipole. Daher ist es logisch, dass das Wasser anders reagiert als sonst, und dass die Werte sich entsprechend ändern.

In jeder Zeitphase $t_1$ und $t_3$ werden eine Anzahl $n_i$ ionisiert, d. h. die Energie $n_i E_i$ verbraucht, wobei $E_i$ die Ionisierungsenergie für jedes Molekül ist.

Nach der Ionisierung der Moleküle und Umwandlung zu Dipolmomenten werden sie in Feldrichtung beschleunigt, wodurch Zusammenstöße stattfinden.

Mit der Berechnung der zusammenstoßenden Ionen und Moleküle (in mikroskopischen Beziehungen) kommt man zu einer einfachen Relation bei der Berechnung der mittleren kinetischen Energie des Systems:

$$E_{k(S.Gx)} = \tfrac{1}{2} \cdot \mu \cdot \overline{v}_{im}^2$$

Das ist die Relation der mittleren kinetischen Energie der Ionen und Moleküle beim Zusammenstoß.

Darin sind:

$\mu$ = verringerte Masse der Ionen-Moleküle;

$\overline{v}_{im}$ = mittlere Geschwindigkeit der Ionen-Moleküle beim Zusammenstoß.

Die Energie $(E_{K(SGx)})$ für Ionen-Moleküle bei SGx ist:

$$E_{k(S.Gx)} = \tfrac{1}{2} \cdot \mu \cdot \overline{v}_{im}^2 = \frac{3}{2} \cdot K_b \cdot T$$

Der gesamte Energieverbrauch bei $S_{Gx}$ wird wie folgt berechnet:

$E_{SGx}$(total) = Ionisationsenergie + mittlere kinetische Energie der H-Bindungen + Arbeit auf Umgebung (Dampfdruckarbeit W) + wiedergewonnene Energie (Gibb's Energie)

$$E_{S.Gx(total)} = n_i \cdot E_i + \tfrac{1}{2} \cdot n' \cdot \mu \cdot \overline{v}_{im}^{\,2} + E_H + W - \Delta iG$$

wobei n' Anzahl der Zusammenstöße der Ionen-Moleküle ist,
und wobei $E_H$ die zum Zerlegen der H-Bindungen nötige Energie ist, die im Gegensatz zu normalen Systemen (bei denen eine Erhöhung der Wärmeenergie auftritt), durch provisorische Ionisation verursacht wird und nur ¼ der Wärmeenergie beträgt.

Zum Vergleich: Im Gegensatz zum beschriebenen $SG_x$ Verfahren wird in normalen Verfahren die Energie durch Wärmezufuhr verbraucht und zwar

1. für das Zerlegen der H-Bindungen,
2. für die Übertragung der Arbeit auf die Umgebung (wie beim $SG_x$ Verfahren) und
3. für die Erzeugung der kinetischen Energie (wieder durch Wärmezufuhr).

Im obigen Prozess wird das Wasser von Temperatur T, auf 100˚ C erhitzt und durch die Verdampfungswärme ($L_v$) verdampft.

$$Q = m \cdot c \cdot \Delta T + m \cdot L_v$$

Wie dargelegt, arbeiten die zwei Systeme unterschiedlich und dabei ist auch der jeweilige Energieverbrauch verschieden.

Beim $SG_x$-Verfahren werden durch ständige Erhöhung der $v_{im}$ und der Anzahl der Zusammenstöße in Zeitphasen $t_1$ und $t_3$ die Moleküle in Zeiten $t_2$ und $t_4$ in die nötige Fluchtposition (als Dampf) gerückt.

Aufgrund der niedrigen Anzahl der $n_i$ und des Wertes der $E_i$ ist hier die Ionisationsenergie $n_i - E_i$ vernachlässigbar klein.

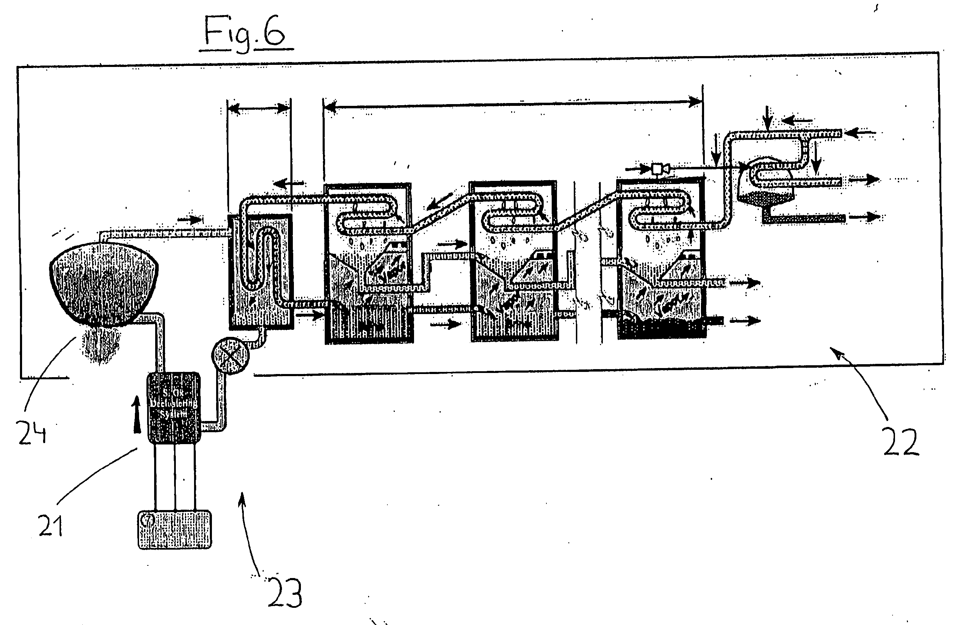

Das erfindungsgemäße Verfahren kann problemlos mit vorhandenen Systemen (beispielsweise Boilern) kombiniert werden. Solche Kombinationen, wie sie beispielsweise in Figur 6 gezeigt sind, werden als Hybrid bezeichnet. Dadurch wird deren Energieverbrauch deutlich verringert. Auf diese Weise kann die normale Zerteilung der Wasserstoffbindungen durch die erfindungsgemäße Technik vorgenommen werden, so dass ca. ¼ der normal nötigen Energie verbraucht wird. Die erfindungsgemäße Technik wird mit dem Wasserrücklauf zum Boiler kombiniert. Dadurch wird das Wasser fast frei von Wasserschwärmen (cluster) dem Boiler zugeführt, wodurch die nötige Energie zum Kochen und Verdampfen deutlich geringer ist (45 %) als sonst. Wegen der zwangsläufigen Rekombination sollte der Abstand des kombinierten Teiles vom Boiler möglichst klein sein.

Bei dem Hybridsystem aus Figur 6 lässt sich die erfindungsgemäße Vorrichtung 21 mit einer herkömmlichen Dampferzeugungsanlage 22 zu dem Hybridsystem 23 verbinden und ermöglicht es hierbei, einem Boiler 24 der Dampferzeugungsanlage eine Flüssigkeit zuzuführen, die aufgrund bereits aufgebrochener Wasserstoffbindungen nur eine weitaus geringere Energie als üblich zur Dampferzeugung benötigt. Die restlichen Bestandteile der Dampferzeugungsanlage 22 müssen hier nicht im Detail beschrieben werden, da sie nicht wesentlich für die hier vorliegende Erfindung sind.

**Patentansprüche**

1. Verfahren zum Verdampfen einer Flüssigkeit (2), insbesondere Wasser (2), wobei zumindest zwei korrespondierende Elektroden (6), die an zumindest einen Signalgenerator (7) angeschlossen sind, in die Flüssigkeit (2) eintauchen und sie zumindest teilweise einem elektrischen Feld aussetzen, wobei das elektrische Feld während einer Zeitphase $t_1$ aufrechterhalten wird, und dass nach der Zeitphase $t_1$ die Richtung des elektrischen Feldes zwischen den jeweiligen Elektroden (6) umgekehrt wird und die Flüssigkeit (2) zwischen den Elektroden während einer Zeitphase $t_3$ einem elektrischen Feld in umgekehrter Richtung ausgesetzt wird, und dass in der weiteren Folge zur Verdampfung der Flüssigkeit (2) die Polarität der beiden Elektroden (6) einem ständigen Wechsel unterzogen wird,
**dadurch gekennzeichnet,**
**dass** während der jeweiligen Umkehrung der Richtung des elektrischen Feldes eine Zeitphase $t_2$, $t_4$ liegt, in der das elektrische Feld zwischen den Elektroden (6) zumindest nahezu aufgehoben wird, so dass sich ein Teil der während der Zeitphasen $t_1$ bzw. $t_3$ gebildeten Ionen wieder rekombiniert.

**2.** Verfahren nach Anspruch 1,
**dadurch gekennzeichnet,**
**dass** die erwärmte Flüssigkeit (2) einem Boiler einer Dampferzeugungsanlage zugeführt wird.

**3.** Verfahren nach Anspruch 1,
**dadurch gekennzeichnet,**
**dass** die Zeitphasen $t_2$, $t_4$ wesentlich kürzer sind als die Zeitphasen $t_1$ und $t_3$.

**4.** Verfahren nach Anspruch 1,
**dadurch gekennzeichnet,**
**dass** die Flüssigkeit (2) jeweils zu Beginn der Zeitphasen $t_1$ und $t_3$ nahezu impulsartig dem elektrischen Feld ausgesetzt wird.

**5.** Verfahren nach Anspruch 1,
**dadurch gekennzeichnet,**
**dass** zur Erzeugung des elektrischen Feldes an die Elektroden (6) eine steil ansteigende Spannung angelegt wird.

**6.** Verfahren nach Anspruch 1,
**dadurch gekennzeichnet,**
**dass** während der Zeitphasen $t_1$ und/oder $t_3$ an den Elektroden (6) eine pulsierende Gleichspannung anliegt und daher die elektrische Feldstärke einen zyklischen Wechsel durchläuft.

**7.** Verfahren nach Anspruch 6,
**dadurch gekennzeichnet,**
**dass** der zyklische Wechsel der vom Signalgenerator (7) erzeugten Spannung in Abhängigkeit der Menge und der Art der in der Flüssigkeit (2) gelösten Salze variierbar ist.

**8.** Verfahren nach Anspruch 1,
**dadurch gekennzeichnet,**
**dass** die Zeitphasen $t_1$, $t_2$, $t_3$ und $t_4$ in Abhängigkeit der Menge und der Art der in der Flüssigkeit (2) gelösten Salze gewählt und kontinuierlich überprüft und angepasst werden.

**9.** Verfahren nach Anspruch 1,
**dadurch gekennzeichnet,**
**dass** die Elektroden (6) aus einem nicht-metallischen Material oder einem Polymermaterial bestehen.

**10.** Verfahren nach Anspruch 1,
**dadurch gekennzeichnet, dass** als Flüssigkeit (2) ungereinigtes Wasser und/oder Meerwasser verwendet wird.

**11.** Verfahren nach Anspruch 1,
**dadurch gekennzeichnet,**
**dass** der Zyklus des Polaritätswechsels so lange wiederholt wird, bis die Anzahl der Ionen größer ist als die Anzahl der neutralen Teilchen und die Geschwindigkeit der im elektrischen Feld beschleunigten Ionen größer ist als die thermische Geschwindigkeit der neutralen Teilchen.

**12.** Verfahren nach Anspruch 1,
**dadurch gekennzeichnet,**
**dass** der Signalgenerator (7) eine variierbare Gleichspannung erzeugt.

**13.** Verfahren nach Anspruch 1,
**dadurch gekennzeichnet,**
**dass** in der Flüssigkeit (2) vorhandene Mineralien kondensiert und abgeführt werden.

**14.** Verfahren nach Anspruch 1,
**dadurch gekennzeichnet,**
**dass** die Art der Stellung der Elektroden (6), die verschieden sind, einer kapazitiven Struktur entsprechen.

**15.** Verfahren nach Anspruch 1,

**dadurch gekennzeichnet,**
**dass** der Signalgenerator (7) Amplituden von einigen hundert Volt erzeugt.

**16.** Verfahren nach Anspruch 1,
**dadurch gekennzeichnet,**
**dass** die Elektroden (6) als flächige Platten ausgebildet sind.

**17.** Verfahren nach Anspruch 1,
**dadurch gekennzeichnet,**
**dass** die Elektroden (6) gekrümmt ausgebildet sind.

**18.** Verfahren nach Anspruch 1,
**dadurch gekennzeichnet,**
**dass** die Abstände der korrespondierenden Elektroden (6) in Abhängigkeit der Art und Menge der in der Flüssigkeit (2) gelösten Salze gewählt werden.

**19.** Vorrichtung zur Durchführung des Verfahrens nach einem der Ansprüche 1 bis 18,
**dadurch gekennzeichnet,**
**dass** mindestens zwei korrespondierenden Elektroden (6), die an zumindest einen Signalgenerator (7) angeschlossen sind, in eine Flüssigkeit (2) eintauchbar sind um sie zumindest teilweise einem elektrischen Feld auszusetzen, wobei der Signalgenerator (7) und die Elektroden (6) ausgestaltet und zusammenwirkend konfiguriert sind, um das elektrische Feld während einer Zeitphase $t_1$ aufrechtzuerhalten, nach der Zeitphase $t_1$ die Richtung des elektrischen Feldes zwischen den jeweiligen Elektroden (6) umzukehren, die Flüssigkeit (2) zwischen den Elektroden (6) während einer Zeitphase $t_3$ einem elektrischen Feld in umgekehrter Richtung auszusetzen und in der weiteren Folge zur Verdampfung der Flüssigkeit (2) die Polarität der beiden korrespondierenden Elektroden (6) einem ständigen Wechsel zu unterziehen, **dadurch gekennzeichnet, dass** der Signalgenerator (7) und die Elektroden (6) so ausgestaltet sind und zusammenwirkend konfiguriert sind, dass während des Umkehrung der Richtung des elektrischen Feldes eine Zeitphase $t_2$, $t_4$ liegt, in der das Elektrische Feld zwischen den Elektroden zumindest nahezu aufgehoben wird, so dass sich ein Teil der während der Zeitphasen $t_1$ bzw. $t_3$ gebildeten Ionen wieder rekombiniert.

**Claims**

**1.** Method of evaporation of a fluid (2), in particular water (2), wherein at least two corresponding electrodes (6) which are connected to at least one signal generator (7) are immersed in the fluid (2) and expose it at least partially to an electrical field, wherein the electrical field is maintained during a time phase $t_1$, and that after the time phase $t_1$ the direction of the electrical field between the respective electrodes (6) is reversed and the fluid (2) between the electrodes is exposed during a time phase $t_3$ to an electrical field in the reverse direction, and that as the sequence proceeds in order to evaporate the fluid (2) the polarity of the two electrodes (6) is subject to continuous alternation, **characterised in that** during the respective reversal of the direction of the electrical field there is a time phase $t_2$, $t_4$ in which the electrical field between the electrodes (6) is at least almost cancelled, so that a proportion of the ions formed during the time phases $t_1$, $t_3$ respectively recombines again.

**2.** Method as claimed in Claim 1, **characterised in that** the heated fluid (2) is delivered to a boiler of a steam generation plant.

**3.** Method as claimed in Claim 1, **characterised in that** the time phases $t_2$, $t_4$ are substantially shorter than the time phases $t_1$ and $t_3$.

**4.** Method as claimed in Claim 1, **characterised in that** the fluid (2) is exposed to the electrical field almost in a pulsed manner at the start of each of the time phases $t_1$ and $t_3$.

**5.** Method as claimed in Claim 1, **characterised in that** in order to generate the electrical field a steeply increasing voltage is applied to the electrodes (6).

**6.** Method as claimed in Claim 1, **characterised in that** during the time phases $t_1$ and/or $t_3$ a pulsating direct current voltage is applied to the electrodes (6) and therefore the electrical field strength goes through a cyclical alternation.

**7.** Method as claimed in Claim 6, **characterised in that** the cyclical alternation of the voltage generated by the signal generator (7) is variable as a function of the quantity and type of the salts dissolved in the fluid (2).

**8.** Method as claimed in Claim 1, **characterised in that** the time phases $t_1$, $t_2$, $t_3$ and $t_4$ are chosen as a function of the quantity and the type of the salts dissolved in the fluid (2) and are continuously checked and adapted.

**9.** Method as claimed in Claim 1, **characterised in that** the electrodes (6) are made from a non-metallic material or a polymer material.

**10.** Method as claimed in Claim 1, **characterised in that** unpurified water and/or sea water is used as the fluid (2).

**11.** Method as claimed in Claim 1, **characterised in that** the cycle of the alternation of polarity is repeated until the number of ions is greater than the number of neutral particles and the velocity of the ions accelerated in the electrical field is greater than the thermal velocity of the neutral particles.

**12.** Method as claimed in Claim 1, **characterised in that** the signal generator (7) generates a variable direct current voltage.

**13.** Method as claimed in Claim 1, **characterised in that** minerals present in the fluid (2) are condensed and extracted.

**14.** Method as claimed in Claim 1, **characterised in that** the type and position of the electrodes (6), which are different, correspond to a capacitive structure.

**15.** Method as claimed in Claim 1, **characterised in that** the signal generator (7) generates amplitudes of several hundred volts.

**16.** Method as claimed in Claim 1, **characterised in that** the electrodes (6) are constructed as flat plates.

**17.** Method as claimed in Claim 1, **characterised in that** the electrodes (6) are of curved construction.

**18.** Method as claimed in Claim 1, **characterised in that** the distances between the corresponding electrodes (6) are chosen as a function of the type and quantity of the salts dissolved in the fluid (2).

**19.** Apparatus for carrying out the method as claimed in any one of Claims 1 to 18, **characterised in that** at least two corresponding electrodes (6) which are connected to at least one signal generator (7) can be immersed in a fluid (2) in order to expose it at least partially to an electrical field, wherein the signal generator (7) and the electrodes (6) are designed and configured so as to co-operate in order to maintain the electrical field during a time phase $t_1$, to reverse the direction of the electrical field between the respective electrodes (6) after the time phase $t_1$, to expose the fluid (2) between the electrodes (6) to an electrical field in the reverse direction during a time phase $t_3$, and as the sequence proceeds to subject the polarity of the two corresponding electrodes (6) to a continuous alternation for the evaporation of the fluid (2), **characterised in that** the signal generator (7) and the electrodes (6) are designed and configured so as to co-operate so that during the reversal of the direction of the electrical field there is a time phase $t_2$, $t_4$ in which the electrical field between the electrodes is at least almost cancelled so that a proportion of the ions formed during the time phases $t_1$, $t_3$ respectively recombines again.

**Revendications**

**1.** Procédé de vaporisation d'un liquide (2), en particulier de l'eau (2),
selon lequel au moins deux électrodes (6) correspondantes qui sont reliées au moins à un générateur de signaux (7) plongent dans le liquide (2) et l'exposent en partie à un champ électrique, le champ électrique étant maintenu pendant une phase de temps $t_1$, et le sens du champ électrique entre les électrodes (6) respectives est inversé après la phase de temps $t_1$ et le liquide (2) entre les électrodes est exposé à un champ électrique de sens inverse pendant une phase de temps $t_3$, et par la suite la polarité des deux électrodes (6) est soumise à une alternance continuelle pour vaporiser le liquide (2),
**caractérisé par le fait**
**qu'**il existe pendant l'inversion respective du sens du champ électrique une phase de temps $t_2$, $t_4$ dans laquelle le champ électrique entre les électrodes (6) est au moins quasiment annulé de sorte qu'une partie des ions formés pendant les phases de temps $t_1$ ou $t_3$ se recombinent.

2. Procédé selon la revendication 1,
**caractérisé par le fait**
**que** le liquide (2) réchauffé est amené à une chaudière d'une installation de production de vapeur.

3. Procédé selon la revendication 1,
**caractérisé par le fait**
**que** les phases de temps $t_2$, $t_4$ sont beaucoup plus courtes que les phases de temps $t_1$ et $t_3$.

4. Procédé selon la revendication 1,
**caractérisé par le fait**
**que** le liquide (2) est exposé au champ électrique de manière quasi impulsionnelle au début de chaque phase de temps $t_1$ et $t_3$.

5. Procédé selon la revendication 1,
**caractérisé par le fait**
**que** l'on applique une tension montant en pente raide pour générer le champ électrique aux électrodes (6).

6. Procédé selon la revendication 1,
**caractérisé par le fait**
**que** l'on applique une tension continue pulsée aux électrodes (6) pendant les phases de temps $t_1$ et/ou $t_3$ et que l'intensité du champ électrique subit de ce fait une alternance cyclique.

7. Procédé selon la revendication 6,
**caractérisé par le fait**
**que** l'alternance cyclique de la tension générée par le générateur de signaux (7) est variable en fonction de la quantité et de la nature des sels dissous dans le liquide (2).

8. Procédé selon la revendication 1,
**caractérisé par le fait**
**que** les phases de temps $t_1$, $t_2$, $t_3$ et $t_4$ sont choisies en fonction de la quantité et de la nature des sels dissous dans le liquide (2) et vérifiées et adaptées en continu.

9. Procédé selon la revendication 1,
**caractérisé par le fait**
**que** les électrodes (6) sont réalisées dans un matériau non métallique ou un matériau polymère.

10. Procédé selon la revendication 1,
**caractérisé par le fait**
**que** l'on utilise de l'eau non purifiée et/ou de l'eau de mer comme liquide (2).

11. Procédé selon la revendication 1,
**caractérisé par le fait**
**que** le cycle d'alternances de polarité est répété jusqu'à ce que le nombre d'ions soit plus grand que le nombre de particules neutres et que la vitesse des ions accélérés dans le champ électrique soit plus grande que la vitesse thermique des particules neutres.

12. Procédé selon la revendication 1,
**caractérisé par le fait**
**que** le générateur de signaux (7) génère une tension continue variable.

13. Procédé selon la revendication 1,
**caractérisé par le fait**
**que** les minéraux présents dans le liquide (2) sont condensés et évacués.

14. Procédé selon la revendication 1,
**caractérisé par le fait**

**que** la manière dont sont positionnées les électrodes (6), qui sont différentes, correspond à une structure capacitive.

15. Procédé selon la revendication 1,
**caractérisé par le fait**
**que** le générateur de signaux (7) génère des amplitudes de quelques centaines de volt.

16. Procédé selon la revendication 1,
**caractérisé par le fait**
**que** les électrodes (6) sont réalisées sous forme de plaques planes.

17. Procédé selon la revendication 1,
**caractérisé par le fait**
**que** les électrodes (6) sont de forme courbe.

18. Procédé selon la revendication 1,
**caractérisé par le fait**
**que** les distances des électrodes (6) correspondantes sont choisies en fonction de la nature et de la quantité des sels dissous dans le liquide (2).

19. Dispositif pour réaliser le procédé selon l'une des revendications 1 à 18,
**caractérisé par le fait**
**qu'**au moins deux électrodes (6) correspondantes qui sont reliées à au moins un générateur de signaux (7) peuvent être plongées dans un liquide (2) pour l'exposer au moins partiellement à un champ électrique, le générateur de signaux (7) et les électrodes (6) étant conçus et configurés de manière à coopérer pour maintenir le champ électrique pendant une phase de temps $t_1$, inverser le sens du champ électrique entre les électrodes (6) respectives après la phase de temps $t_1$, exposer le liquide (2) entre les électrodes (6) à un champ électrique de sens inverse pendant une phase $t_3$ et par la suite soumettre la polarité des deux électrodes (6) correspondantes à une alternance continuelle pour vaporiser le liquide (2), **caractérisé par le fait que** le générateur de signaux (7) et les électrodes (6) sont conçus et configurés de manière à coopérer de telle manière qu'il existe pendant l'inversion du sens du champ électrique une phase de temps $t_2$, $t_4$ dans laquelle le champ électrique entre les électrodes (6) est au moins quasiment annulé de sorte qu'une partie des ions formés pendant les phases de temps $t_1$ ou $t_3$ se recombinent.

Fig.1

Fig.2

Fig. 3a-d

Fig. 3e-f

Fig.4

Fig. 5

Fig.6

EP 1 457 242 B1